(19) Europäisches Patentamt
European Patent Office
Office européen des brevets

(11) Veröffentlichungsnummer: **0 025 992**
**B1**

(12) # EUROPÄISCHE PATENTSCHRIFT

(45) Veröffentlichungstag der Patentschrift: **07.09.83**

(21) Anmeldenummer: **80105633.4**

(22) Anmeldetag: **19.09.80**

(51) Int. Cl.³: **C 03 C 17/32,** C 08 G 18/66, C 08 G 18/38, C 08 G 18/73, C 08 G 18/75

(54) **Verfahren zum Beschichten von Glasoberflächen.**

(30) Priorität: **21.09.79 DE 2938309**

(43) Veröffentlichungstag der Anmeldung: **01.04.81 Patentblatt 81/13**

(45) Bekanntmachung des Hinweises auf die Patenterteilung: **07.09.83 Patentblatt 83/36**

(84) Benannte Vertragsstaaten: **BE CH DE FR GB IT LI LU NL SE**

(56) Entgegenhaltungen:
**EP-A-0 001 658**
**FR-A-2 360 523**
**FR-A-2 373 494**

(73) Patentinhaber: **CHEMISCHE WERKE HÜLS AG, Postfach 1320, D-4370 Marl 1 (DE)**

(72) Erfinder: **Gras, Rainer, Dr., An der Ziegelei 91, D-4690 Herne 2 (DE)**

(74) Vertreter: **Steil, Hanna, Dipl.-Chem., RSP PATENTE - PB 15 Postfach 1320, D-4370 Marl 1 (DE)**

**EP 0 025 992 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zum Beschichten von Glasoberflächen

## Beschreibung und Beispiele

Gegenstand der Erfindung ist ein spezielles Verfahren zur Herstellung von transparenten, festhaftenden, einheitlichen, duroplastischen Überzügen für Glasflaschen auf Basis von lösungsmittelfreien PUR-Quasi-Einkomponentensystemen unter Verwendung von Polyesterpolyolen-Polyol-Gemischen und 2,4,6-Triamino-1,3,5-triazin. Mit Hilfe dieser PUR-Überzüge werden den kohlensäurehaltigen Getränkeflaschen, wie Bier, Coca-Cola®, Mineralwasser, Fruchtsaftgetränken usw. eine außerordentliche Stabilität verliehen und bei Mehrwegflaschen die Gebrauchsdauer verlängert. Infolge Schlag- und Stoßeinwirkung, aber auch durch Erhitzen im Sonnenlicht oder an Wärmequellen, ist es nämlich in der Vergangenheit häufig zum Bersten ungeschützter Flaschen gekommen, die verschiedentlich schwere körperliche Verletzungen, insbesondere Augenverletzungen bei Menschen hervorgerufen haben.

Einige der bekannten Beschichtungen für diesen Zweck besitzen den Nachteil, daß sich die Überzugsschicht bei wiederholter Reinigung eintrübt, was bei thermoplastischen Materialien möglicherweise auf einen Nachkristallisationseffekt des Kunststoffs zurückzuführen ist. Derartige Flaschen vermitteln einen negativen optischen Eindruck und sind daher verkaufspsychologisch unerwünscht. Der Nachteil von duroplastischen äthergruppenenthaltenden Kunststoffüberzügen liegt zum einen darin begründet, daß die PUR-Überzüge auf Polyätherpolyolbasis eine ziemlich schlechte Einreißfestigkeit aufweisen und zum anderen eine starke oxidative Anfälligkeit zeigen, was zum Verspröden der Schutzschicht führt und somit, insbesondere bei Mehrwegflaschen, dann der Splitterschutz nicht mehr gewährleistet ist.

Es wurde nun gefunden, daß man Glasoberflächen auch ohne diese und andere Nachteile beschichten kann, wenn man das Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 μm durch Auftragen von isocyanatgruppenhaltigen, lösungsmittelfreien Beschichtungsmassen auf eine zunächst gereinigte, mit einer wäßrigen oder alkoholischen Silanschlichte behandelte und getrocknete und anschließend auf 80–120°C erwärmte Glasoberfläche oder sowie gegebenenfalls Aushärten des Überzugs bei erhöhter Temperatur so durchführt, daß man als isocyanatgruppenhaltige, lösungsmittelfreie Beschichtungsmasse eine solche verwendet, die aus Umsetzungsprodukten hydroxylgruppenhaltiger Polyester aus aliphatischen und/oder cycloaliphatischen Di- und/oder Tricarbonsäuren und Diolen und/oder Triolen/Polyol-Gemischen mit einer Funktionalität von $\geqq 2$ und aliphatischen und/oder cycloaliphatischen Diisocyanaten oder deren Gemischen mit einem NCO-Gehalt von 5–15% sowie 2,4,6-Triamino-1,3,5-triazin bestehen und wenn man die Beschichtung bei einer Temperatur von 180–260°C aushärtet. Die erhaltene isocyanatgruppenhaltige, lösungsmittelfreie Beschichtungsmasse stellt eine Quasi-Einkomponentenmasse dar. Die applizierte Kunststoffschicht ist hochelastisch, mit guter Einreißfestigkeit und guten Tieftemperatureigenschaften und zeigt eine ausgezeichnete Haftung, so daß beim Glasbruch oder dem Bersten beispielsweise von Flaschen die Glassplitter innerhalb der Schutzschicht verbleiben. Nach der Zerstörung der Glasflasche bleibt die Flaschenform vollständig erhalten. Die auftretende kinetische Energie wird durch Streckung und Erwärmung des Kunststoffüberzugs vernichtet.

Neben der Wetterstabilität der Überzüge ist von besonderem Vorteil die Beständigkeit der Beschichtung gegenüber heißen, alkalihaltigen Spüllaugen, in denen die Flaschen vor dem Abfüllen der Getränke gereinigt werden. Dieses trifft in besonderem Maße für Mehrwegflaschen zu, die vor jedem Füllvorgang einer intensiven Reinigung unterzogen werden.

Ein weiterer Vorteil der erfindungsgemäßen Beschichtung liegt darin, daß auch nach wiederholtem Spülen in heißer, alkalischer Waschlauge keine Verschlechterung der mechanischen Kenndaten und keinerlei Haftungsverlust auftreten. Die mit einem derartigen Kunststoffüberzug versehenen Glasflaschen können ohne Bedenken als Behälter für kohlensäurehaltige Getränke verwendet werden, da keine Gefahr beim Zubruchgehen oder Zerplatzen für den Menschen mehr auftreten kann.

Bei Verwendung als Mehrwegflasche ist die Gebrauchsdauer einer beschichteten Flasche wesentlich länger als die der unbeschichteten Flasche, die infolge der Bewegungsabläufe durch Gegeneinanderreiben, an scharfen Kanten und bei den Spülvorgängen in heißen Lösungen oberflächenmäßig stark beansprucht bzw. leicht beschädigt werden können.

Zur Durchführung dieses Verfahrens wird die gereinigte Glasflasche zunächst mit einer wäßrigen oder alkoholischen Silanschlichte behandelt. Für die Behandlung werden Silane mit Resten verwendet, die zwei verschiedenen Funktionsgruppen zuzuordnen sind. Dieses sind zum einen niedere Alkoxyreste, insbesondere Methoxy- und Äthoxyreste, die mit den OH-Gruppen der Glasoberfläche reagieren und zum anderen organische Reste mit solchen funktionellen Gruppen, die mit den Isocyanatgruppen reagieren können, wie Aminogruppen, Epoxi-, Mercaptogruppen usw., z. B. γ-Aminopropyltrimethoxysilan, γ-Aminopropyltriäthoxysilan, Glycidyloxypropyltrimethoxysilan, Glycidyloxypropyltriäthoxysilan, γ-Mercaptopropyltrimethoxysilan, γ-Mercaptopropyltriäthoxysilan usw.

Die Behandlung der Glasoberfläche bei der Glasflasche kann beispielsweise durch Tauchen oder Besprühen mit den Schlichtemitteln erfolgen. Die beispielsweise so behandelten Flaschen können entweder separat bei 25—100° C getrocknet werden oder die Trocknung erfolgt durch die Wärme der Glasflasche (80—100° C), d. h. bei einer Temperatur, wie sie bei der Flaschenherstellung im Laufe des Abkühlprozesses von Glasgegenständen auftritt.

Die Applikation der nachfolgend beschriebenen lösungsmittelfreien PUR-Quasi-Einkomponentenbeschichtungsmassen auf vorgewärmte Glasoberflächen erfolgt nach bekannten Verfahren, wie Gießen, Spritzen, Tauchen. Zu diesem Zweck wird die Beschichtungsmasse aus Viskositätsgründen auf 30—90° C, vorzugsweise 50—70° C vorgewärmt.

Nach der Applikation der Beschichtungsmaterialien kann die Wärmezufuhr bis zur vollständigen Aushärtung der Beschichtungsmasse fortgesetzt werden, wenn die vorhandene Wärmekapazität zur Härtung selbst nicht ausreicht. Die Härtung erfolgt dann bei einer Temperatur im Bereich von 180—260° C, vorzugsweise 210—240° C.

Zur Herstellung der Beschichtung eignen sich beispielsweise aliphatische und/oder cycloaliphatische Diisocyanate, wie sie beispielsweise in dem Artikel von W. Siefken in Justus Liebigs Annalen der Chemie 562, Seiten 75—136, beschrieben sind, wie Äthylendiisocyanat-1,2, Tetramethylendiisocyanat-1,4, Hexamethylendiisocyanat-1,6, 2,2,4- bzw. 2,4,4-Trimethylhexamethylendiisocyanat-1,6 (TMDI), Dodecandiisocyanat-1,12, $\omega,\omega$-Diisocyanatodipropyläther, Lysindiisocyanat, Cyclobutan-1,3-diisocyanat, Cyclohexan-1,3 und -1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl-(1,4-methanonaphthalen-2 (oder 3) 5-ylendimethylendiisocyanat, Hexahydro-4,7-methano-indan-1 (oder 2) 5 (oder 6) ylendimethylen-diisocyanat, Hexahydro-4,7-methanindan-1- (oder 2) 5 (oder 6) -ylendiisocyanat 3(4), 8(9)-Diisocyanatomethyltricyclo[5.2.1.$0^{2,6}$]decan (auch TCDI abgekürzt), Hexahydrotoluylendiisocyanat, Perhydro-2,4'- und/oder -4,4'-diphenylmethandiisocyanat, sowie beliebige Gemische der Isomeren. Weitere geeignete Isocyanate werden in dem genannten Artikel in den Annalen auf Seite 122 f. beschrieben. Selbstverständlich können auch Mischungen der Isocyanate eingesetzt werden. Es eignen sich weiter die Umsetzungsprodukte dieser Diisocyanate mit Wasser im Molverhältnis von 2 : $\leqq$1, insbesondere das in der DE-B-2 341 065 beschriebene.

Bevorzugt für das beschriebene Beschichtungsverfahren werden die als IPDI und TCDI bezeichneten Diisocyanate eingesetzt. Als Ausgangsprodukte der lösungsmittelfreien Beschichtungsmasse eignen sich besonders Gemische trifunktioneller und bifunktioneller, hydroxylgruppenhaltiger Polyester aus aliphatischen und/oder cycloaliphatischen Di- und/oder Tricarbonsäuren oder deren funktionelle Derivate, wie Estern, Anhydriden, Halogeniden etc. und Diolen und/oder Triolen wobei unter tri- bzw. bifunktionellen Polyesterpolyolen solche mit 3 oder 2 OH-Gruppen verstanden werden. Das Molekulargewicht der Polyesterpolyole sollte in dem angegebenen Bereich liegen.

Die Herstellung dieser Polyesterpolyole kann nach bekannten Verfahren erfolgen, in denen man Triole oder Diole mit den aliphatischen und/oder cycloaliphatischen Dicarbonsäuren oder den funktionellen Derivaten unter Erhitzen mit oder ohne Katalysator umsetzt. Geeignete Triole sind beispielsweise Glycerin, Trimethylolpropan (TMP) Trimethyloläthan, Hexantriol, Triäthanolamin u. ä. Beispiele für geeignete Diole werden weiter unten angegeben. Anstelle der vorgenannten Triole können zur Erzielung der Trifunktionalität auch Tricarbonsäuren oder deren funktionelle Derivate eingesetzt werden.

Geeignete aliphatische Dicarbonsäuren sind die Säuren, die sich von der allgemeinen Formel

$$HOOC-(CH_2)_n-COOH$$

ableiten lassen, in der $n=4-12$ und die Wasserstoffatome der Methylengruppen teilweise durch $C_1-C_3$-Alkylreste substituiert sein können, wie Adipinsäure, Azelainsäure, Sebazinsäure, Dekandicarbonsäure, Dodekandicarbonsäure, 2,2,4- bzw. 2,4,4-Trimethyladipinsäure u. a.

Unter den geeigneten cycloaliphatischen Dicarbonsäuren sind auch einfach-ungesättigte zu nennen, wie Hexahydrophthalsäure, 4-Methylhexahydrophthalsäure, Tetrahydrophthalsäure, 4-Methyltetrahydrophthalsäure, 1,3- bzw. 1,4-Cyclohexandicarbonsäure.

Die zur Herstellung der trifunktionellen Polyesterpolyole geeigneten Triole wurden weiter oben beschrieben. Die geeigneten Diole zur Herstellung der bifunktionellen Polyesterpolyole werden weiter unten genannt.

Als niedermolekulare, aliphatische und/oder cycloaliphatische Diole, die zur Herstellung der Polyester und als zweite Polyolkomponente beim Verfahren gemäß der Erfindung verwendet werden, kommen solche mit einem Molekulargewicht von etwa 60 bis etwa 250 in Frage, z. B. Äthylenglykol, 1,2-Propylenglykol, 1,3-Propylenglykol, Butandiol-1,3, Butandiol-1,4, Pentandiol-1,5, 2- bzw. 3-Methylpentandiol-1,5, Neopentylglykol, Hexandiol-1,6, 1,4-Cyclohexandiol, 1,4-Dimethylolcyclohexan, 2,2-Bis-(4-hydroxycyclohexyl)-propan, 2,4,4- bzw. (2,2,4)-Trimethylhexandiol-1,6 (TMH-diol), Hydroxypivalinsäureneopentylglycolester, Diäthylenglycol, Dipropylenglykol, Triäthylenglykol, Tetraäthylenglykol, Pentaäthylenglykol oder Gemische dieser Diole und/oder vorstehende Triole. Von diesen niedermolekularen, aliphatischen Diolen führen Hexandiol-1,6, 2,4,4- bzw. (2,2,4)-Trimethylhexandiol-1,6 und Butandiol-1,4 zu den besten Ergebnissen.

Die Carbonsäuren und die Polyole werden in solchen Mengen eingesetzt, in dem man das COOH : OH Verhältnis so wählt, daß die Molekulargewichte der resultierenden tri- bzw. bifunktionellen Polyesterpolyole innerhalb des Bereichs von 400 – 2000, vorzugsweise 500 – 1400, für bifunktionelle bzw. 300 – 1500, vorzugsweise 500 – 900, für trifunktionelle liegen.

Das mittlere Molekulargewicht der beim Verfahren gemäß der Erfindung verwendeten Polyolgemische, bestehend aus tri- und bifunktionellen, hydroxylgruppenhaltigen Polyesterpolyolen und niedermolekularen, aliphatischen und/oder cycloaliphatischen Diolen, sollte zwischen 300 und 800 liegen, vorzugsweise zwischen 350 und 650. Die Funktionalität der eingesetzten, vorgenannten Polyolgemische sollte zwischen > 2 und 3 liegen, vorzugsweise zwischen 2,4 und 2,9.

Die Umsetzung der linearen bi- oder trifunktionellen Polyesterpolyole in Kombination mit den niedermolekularen, aliphatischen oder cycloaliphatischen Diolen oder Triolen mit den aliphatischen bzw. cycloaliphatischen Diisocyanaten kann nach beliebigen an sich bekannten Methoden erfolgen, die beispielsweise in »High Polymers« Vol. XVI Polyurethane; Chemistry and Technologie I Chemistry von Saunders & Frisch (1962), herausgegeben in Interscience Publishers, beschrieben sind. Auf diese Weise werden Präpolymere in Form einer nahezu farblosen Flüssigkeit erhalten, deren NCO-Gehalt im Bereich von etwa 6% bis etwa 10% liegt.

Die Reaktion wird bei etwa 30 bis 100°C für eine Dauer von 24 bis 3 Stunden unter praktisch wasserfreien Bedingungen durchgeführt. Gegebenenfalls kann die Reaktion in Gegenwart eines trockenen Inertgases wie Stickstoff, erfolgen.

Auch können für die Isocyanat-Polyadditionsreaktionen Katalysatoren, wie metallorganische Verbindungen (z. B. Zinnoctoat, Di-n-butylzinndilaurat) und tertiäre Amine (z. B. 1,4-Diazobicyclooctan[2.2.2]) und ihre Gemische, verwendet werden.

Zum Zwecke der Durchführung der Erfindung werden dann die Präpolymeren mit einer separat hergestellten Polyol/2,4,6-Triamino-1,3,5-triazin-Paste in einen zweiten Reaktionsschritt so umgesetzt, daß sich die Hydroxylgruppen des Polyols und die äquivalente Menge an Isocyanatgruppen des Präpolymeren in einer Vorreaktion umsetzen, während die reaktionsträgen $NH_2$-Gruppen des 2,4,6-Triamino-1,3,5-triazins erhalten bleiben. Die Reaktion erfolgt bei Temperaturen zwischen 50 und 100°C, vorzugsweise zwischen 60 und 80°C. In diesem Temperaturintervall reagieren die $NH_2$-Gruppen des 2,4,6-Triamino-1,3,5-triazins nicht oder nur in so geringem Umfang, so daß die Herstellung eines PUR-Quasi-Einkomponentenbeschichtungssystems mit einer Lagerstabilität von etwa 3 Monaten möglich ist. Das NCO-Gruppen zu $NH_2$-Gruppen-Verhältnis sollte im Bereich von 1 : 0,95 – 1 liegen. Das OH/NCO Gruppen-Verhältnis von 1 : 2,4 bis etwa 1 : 1,6, vorzugsweise von 1 : 2,2, bis etwa 1 : 1,8 wird bei der Umsetzung des Präpolymeren Polyol/Triazin-Paste eingesetzt. Aufgrund der geringen Reaktivität der $NH_2$-Gruppen des 2,4,6-Triamino-1,3,5-triazins bei den für die Isocyanat-Polyadditionsreaktionen üblichen Reaktionsbedingungen kann das PUR-Beschichtungsmaterial erfindungsgemäß in bekannter Weise auch in einem Einstufenprozeß (Beschreibung nachstehend) hergestellt werden.

Nach Beendigung der Umsetzung, die zweckmäßigerweise durch titrimetrische Bestimmung der NCO-Gruppen verfolgt wird, wird die PUR-Beschichtungsmasse so lange evakuiert bis keine Blasen mehr aufsteigen.

Gegenstand der Erfindung sind also spezielle Beschichtungsmassen für kohlensäurehaltige Getränkeflaschen, die aus der Hitze härtbaren, lösungsmittelfreien Polyurethan-Quasi-Einkomponentenbeschichtungsmassen bestehen, die durch Umsetzung von Polyesterpolyolen und niedermolekularen, aliphatischen Diolen und/oder Triolen mit Diisocyanaten bzw. Diisocyanat-Harnstoffaddukten und zugemischten 2,4,6-Triamino-1,3,5-triazin entweder in einem Zwei- oder Einstufenprozeß hergestellt werden können.

Zur Verbesserung der Verlaufeigenschaften der Überzüge werden bei der Zubereitung sogenannte Verlaufmittel zugesetzt. Bei diesen Mitteln kann es sich um chemische Verbindungen bzw. deren Gemische unterschiedlicher chemischer Art handeln, z. B. polymere oder monomere Verbindungen, z. B. Acetale, Äther, Mischpolymerisate aus n-Butylacrylat und Vinylisobutyläther, Siliconharze, fluorierte Alkylester etc. Derartige Verlaufmittel können den Formulierungen in Mengen von 0,05 – 0,5 Gew.-%, bezogen auf den Gesamtansatz, zugesetzt werden.

Auch andere gebräuchliche Verarbeitungszusätze von Beschichtungsmassen, wie in den Polyolen lösliche Farbstoffe, Stabilisatoren, Entschäumer etc., können zugesetzt werden. Die zugesetzten Mengen bezogen auf Bindemittel, können innerhalb eines weiten Bereichs schwanken. Die zugesetzte Menge richtet sich nach den Anforderungen an die Qualität der Überzüge.

Die Schichtdicken der ausgehärteten Überzüge können je nach Beanspruchung der Flaschen zwischen 50 und 250 μm schwanken.

Die in den nachstehenden Beispielen genannten mechanischen Kenndaten der PUR-Flaschenbeschichtungen wurden nach folgenden Methoden ermittelt:

Zugfestigkeit }
Dehnung } gemäß DIN 53 455
$\sigma_{100}$-Spannung }

Außerdem wurden Testfolien folgenden Stabilitätsprüfungen unterworfen:

Waschlaugentest:

4gewichtsprozentige NaOH + 0,4 Gew.-% Na-glyconat ein Zyklus: 30 Minuten/80° C

Tropentest:

70° C/100% rel. LF (= relative Luftfeuchtigkeit)

Sterilisation:

121° C/2 h

Weiterhin wurden Haftung und Splitterschutz getestet. Der Splitterschutz wurde in einem sogenannten Falltest geprüft. Zu diesem Zweck wurde in eine beschichtete 0,7 l Getränkeflasche 6,3 g $H_2SO_4$ (98%ig) und 9 g $NaHCO_3$ gegeben und verschlossen. Die entstehende $CO_2$-Menge erzeugt bei 25° C einen Innendruck von ca. 494 kPa (4,0 atü). Die so vorbereitete Testflasche wurde aus einer Höhe von 1,2 m auf eine Betonplatte fallen gelassen und die Streuung der Glassplitter beobachtet.

Die erfindungsgemäßen Beschichtungsmassen werden durch die nachstehenden Beispiele illustriert.

## Allgemeine Herstellungsvorschriften der Beschichtungsmassen

### A Zweistufenverfahren

#### 1) Präpolymer

In erster Stufe wurden die Polyolgemische, bestehend aus bi- und trifunktionellen Polyesterpolyol oder TMP, mit der entsprechenden Menge Diisocyanat (IPDI oder TCDI) unter Anwesenheit genannter Katalysatoren innerhalb von 3–5 Stunden bei einer Reaktionstemperatur von 70–80° C umgesetzt. Die Vollständigkeit der Umsetzung wurde titrimetrisch verfolgt. In dieser Stufe sollte das OH-/NCO-Gruppen-Verhältnis im Bereich von 1 : 2,6–1,8, vorzugsweise 2,45–2,0, liegen.

#### 2) Beschichtungsmasse

Das Präpolymer wurde anschließend mit der Polyol/2,4,6-Triamino-1,3,5-triazin-Paste, hergestellt aus dem entsprechenden Polyesterpolyol und dem gemahlenen 2,4,6-Triamino-1,3,5-triazin mit einer Korngröße $<50\,\mu m$, 1 Stunde bei 70°C zur Reaktion gebracht. In dieser Stufe können auch die gleichen Katalysatoren der Präpolymerstufe eingesetzt werden.

Anschließend im Vakuum bis zur Blasenfreiheit entgast und titrimetrisch die Umsetzung kontrolliert.

### B Einstufenverfahren

1) Die Herstellung des Beschichtungsmaterials im Einstufenverfahren wurde so durchgeführt, daß das IPDI oder andere Diisocyanate, der Katalysator, Verlaufmittel und das 2,4,6-Triamino-1,3,5-triazin vorgelegt wurden und das Polyolgemisch (TMP/lineares Polyesterpolyol oder lineares und trifunktionelles Polyesterpolyol) zugetropft. Die Reaktionstemperatur betrug 70–80°C, die Reaktionszeit 3–5 Stunden. Nach Beendigung der Umsetzung wurde das Endprodukt titrimetrisch kontrolliert und im Vakuum entgast.

2) Die Herstellung der Beschichtungsmasse kann also auch einstufig nach einem sogenannten Gesamtpräpolymerverfahren folgendermaßen durchgeführt werden:

In einem Reaktor wurden IPDI oder das Diisocyanat, Katalysator, Verlaufmittel, ggf. TMP vorgelegt und ggf. bei 70°C zur Reaktion gebracht. Anschließend tropfte man die entsprechende Menge Polyolgemisch, bestehend aus linearen Polyesterpolyolen und ggf. in Kombination mit TMP oder bestehend aus linearen und trifunktionellen Polyesterpolyolen, unter $N_2$-atmosphäre zu. Die Reaktionstemperatur betrug 70–80° C, die Reaktionszeit 3–5 Stunden. (Die vollständige Umsetzung wurde mittels titrimetrischer NCO-Bestimmung kontrolliert.) Danach wurde unter Rühren das gemahlene 2,4,6-Triamino-1,3,5-triazin zugegeben und zur weiteren Homogenisierung durch ein Mischaggregat (Kolloidmühle, Farbtonprüfer etc.) geschickt.

Die ermittelten mechanischen Kenndaten der Folien entsprachen denen gemäß der Verfahren A und B 1 oder B 2 hergestellten Folien.

Beschreibung der in den Beispielen verwendeten Ausgangssubstanzen

A. Polyolkomponenten

1. 584 g Adipinsäure, 312 g Neopentylglykol und 236 g Hexandiol-1,6 wurden zur Veresterung gebracht. Nach Abspaltung vom 8 Mol Wasser wurde unter Zusatz von 0,1 Gew.-% Di-n-butylzinnoxid (DBTO) die Veresterung bis zu einer Säurezahl von <1 mg KOH/g fortgesetzt. Durch Anlegen von Vakuum bei 180° C für ca. 20—30 Minuten wurde ein Produkt mit einem Wassergehalt von <0,05 Gew.-% und einer Hydroxylzahl von 105—111 mg KOH/g (theoretisch: 114 mg KOH/g) und einer Viskosität bei 25° C von ca. 300 Pa · s erhalten.
2. Entsprechend 1 wurden 438 g Adipinsäure, 177 g Hexandiol-1,6 und 260 g Neopentylglykol zur Veresterung gebracht. Hydroxylzahl: 130—143 mg KOH/g, Säurezahl <1 mg KOH/g, Viskosität bei 25° C ca. 250 Pa · s.
3. Entsprechend 1 wurden 292 g Adipinsäure und 354 g Hexandiol-1,6 zur Veresterung gebracht. Hydroxylzahl: 170—185 mg KOH/g, Säurezahl <1 mg KOH/g und Viskosität bei 40° C ca. 50 Pa · s und einem Schmelzpunkt von 35—40° C.
4. Entsprechend 1 wurden 292 g Adipinsäure, 104 g Neopentylglykol, 118 g Hexandiol-1,6 und 134 g 1,1,1-Trimethylolpropan zur Veresterung gebracht. Hydroxylzahl: 265—285 mg KOH/g, Säurezahl <1 mg KOH/g und Viskosität bei 25° C ca. 500 Pa · s.

Tabelle 1 zeigt einige Beispiele mit Kenndaten der PUR-Quasi-Einkomponentensysteme bestehend aus einem Gemisch der linearen Polyesterpolyole, TMP und 2,4,6-Triamino-1,3,5-triazin sowie IPDI. Als Verlaufmittel werden bei den nachstehenden Bespielen ein Handelsprodukt verwendet, das chemisch ein Copolymerisat aus n-Butylacrylat und 2-Äthylhexylacrylat ist.

Tabelle 1

| | Beispiele | | | | |
|---|---|---|---|---|---|
| | 1 | 2 | 3 | 4 | 5 |
| Präpolymer OH/NCO = 1 : X; X = | 2,42 | 2,42 | 2,2 | 2 | |
| Polyester gemäß Beispiel AI | 488,76 | 562,7 | 584,8 | 606,45 | 574,18 |
| Trimethylolpropan | 37,49 | 21,58 | 22,43 | 23,26 | 19,81 |
| Di-n-butylzinndilaurat | 0,1 | 0,1 | 0,1 | 0,1 | 0,5 |
| IPDI | 473,65 | 415,62 | 392,67 | 370,19 | 346,75 |
| NCO-Äquivalent-Gewicht | | | | | |
| theor. | 400 | 456 | 519 | 600 | |
| prakt. | 427 | 470 | 538 | 618 | |
| Viskosität bei | | | | | |
| 60°C (in Pa · s) | 790 | 572 | 660 | 950 | |
| 50°C (in Pa · s) | 1735 | 1175 | 1470 | 1810 | |
| 40°C (in Pa · s) | 4590 | 2830 | 3660 | 4110 | |
| 30°C (in Pa · s) | 14 300 | 8000 | 10 800 | 11 100 | |
| 20°C (in Pa · s) | 52 300 | 25 700 | 27 900 | 2870 | |

Fortsetzung

| | Beispiele | | | | |
|---|---|---|---|---|---|
| | 1 | 2 | 3 | 4 | 5 |
| 2,4,6-Triamino-1,3,5-triazin/Polyol-Paste | | | | | |
| Polyester gemäß Beispiel AI | 500 | 500 | 500 | 500 | |
| 2,4,6-Triamino-1,3,5-triazin | 500 | 500 | 500 | 500 | 57,76 |
| Beschichtungsmasse OH/NCO = 1 : X; X = | 2,21 | 2,21 | 2,04 | 1,88 | |
| Präpolymer | 852,48 | 864,04 | 879,0 | 899,71 | |
| 2,4,6-Triamino-1,3,5-triazin/Polyol-Paste | 146,02 | 134,46 | 119,5 | 98,79 | |
| Di-n-butylzinndilaurat | 0,5 | 0,5 | 0,5 | 0,5 | |
| Verlaufmittel | 1,0 | 1,0 | 1,0 | 1,0 | |
| NCO-Äquivalent-Gewicht | | | | | |
| theor. | 538 | 584 | 657 | 734 | 655 |
| prakt. | 794 | 815 | 897 | 958 | 812 |
| Viskosität bei | | | | | |
| 60°C (in Pa · s) | 1250 | 834 | 975 | 1345 | 1050 |
| 50°C (in Pa · s) | 2570 | 1872 | 2445 | 3785 | 2670 |
| 40°C (in Pa · s) | 7780 | 4740 | 6480 | 7960 | 6695 |
| 30°C (in Pa · s) | 21 560 | 14 600 | 19 000 | 20 500 | 19 800 |
| 20°C (in Pa · s) | 85 000 | 56 000 | 60 900 | 65 800 | 62 100 |
| Mechanische Kenndaten | | | | | |
| Zugfestigkeit ($N/mm^2$) | 35,8 | 36,3 | 37,3 | 38,1 | 37,9 |
| Dehnung (%) | 140 | 250 | 260 | 240 | 250 |
| $\sigma_{100}$-Spannung ($N/mm^2$) | 20,3 | 19,5 | 17,7 | 18,1 | 17,5 |

Die PUR-Quasi-Einkomponentenbeschichtungsmassen in den Beispielen 1–4 wurden nach dem beschriebenen Zweistufenprozeß hergestellt, während die Beschichtungsmasse gemäß Beispiel 5 nach dem Einstufenprozeß B 1 oder B 2 (gleiche Ergebnisse) gefertigt wurde.

Die Ergebnisse der Stabilitätsprüfungen — Waschlauge-, Tropen-, Sterilisationstest — sind in Tabelle 3 zusammengefaßt. Die Haftung der Beschichtungsmassen auf vorbehandelten Glasflaschen und -platten (auch nach 5 Zyklen Waschlaugentest) war ausgezeichnet. Der Splitterschutz war in den Rezepturen mit einer Dehnung von $>150\%$ gewährleistet. Je geringer die Dehnung der Folien (siehe auch Vergleichsbeispiel C 1 und C 3), desto geringer ist auch der Splitterschutz, d. h. die Splitter der

berstenden Glasflaschen sind bis in einen Umkreis >2 m zu finden. Die gleiche Beobachtung wurde gemacht, wenn die Dehnung zwar >150% ist, jedoch die Zugfestigkeit <28 N/mm² betrug.

Tabelle 2 zeigt einige Beispiele mit Kenndaten der PUR-Quasi-Einkomponentensysteme bestehend aus linearen und trifunktionellen Polyesterpolyol oder Trimethylolpropan, 2,4,6-Triamino-1,3,5-triazin und IPDI. Das trifunktionelle Polyesterpolyol nimmt hierbei die gleiche Funktion ein, wie das niedere Polyol der Beispiele 1–5.

Tabelle 2

| | Beispiele | | | | | |
|---|---|---|---|---|---|---|
| | 6 | 7 | 8 | 9 | 10 | 11 |
| Präpolymer OH/NCO = 1 : X; X = | 2,42 | | 2,42 | 2,2 | 2 | 2,42 |
| Polyester gemäß Beispiel A1 | – | 314,72 | 520,76 | 539,63 | 558,02 | 279,98 |
| Polyester gemäß Beispiel A2 | 555,68 | – | – | – | – | – |
| Polyester gemäß Beispiel A3 | – | 166,41 | – | – | – | 198,36 |
| Polyester gemäß Beispiel A4 | – | – | 94,50 | 97,93 | 101,26 | – |
| Trimethylolpropan | 15,12 | 24,13 | – | – | – | 28,76 |
| Di-n-butylzinndilaurat | 0,1 | 0,5 | 0,1 | 0,1 | 0,1 | 0,1 |
| IPDI | 429,1 | 413,41 | 384,64 | 362,34 | 340,62 | 492,8 |
| NCO-Äquivalent-Gewicht | | | | | | |
| theor. | 441 | – | 456 | 562 | 652 | 384 |
| prakt. | 460 | – | 470 | 576 | 674 | 435 |
| Viskosität bei | | | | | | |
| 60°C (in Pa · s) | 294 | | 691 | 798 | 958 | 354 |
| 50°C (in Pa · s) | 587 | | 1344 | 1510 | 1760 | 860 |
| 40°C (in Pa · s) | 1251 | | 3090 | 3240 | 3535 | 2090 |
| 30°C (in Pa · s) | 3120 | | 8340 | 8670 | 9000 | 5975 |
| 20°C (in Pa · s) | 8500 | | 26 100 | 26 400 | 26 850 | 19 680 |

Fortsetzung

| | Beispiele | | | | | |
|---|---|---|---|---|---|---|
| | 6 | 7 | 8 | 9 | 10 | 11 |
| 2,4,6-Triamino-1,3,5-triazin/ Polyol-Paste | | | | | | |
| Polyester gemäß Beispiel AI | 500 | | 500 | 500 | 500 | 500 |
| 2,4,6-Triamino-1,3,5-triazin/ Polyol-Paste | 500 | 79,84 | 500 | 500 | 500 | 500 |
| Beschichtungsmasse OH/NCO = 1 : X; X = | 2,21 | 2,2 | 2,21 | 2,04 | 1,87 | 2,23 |
| Präpolymer | 861,52 | | 864,04 | 886,0 | 900,75 | 854,84 |
| 2,4,6-Triamino-1,3,5-triazin/ Polyol-Paste | 136,98 | | 134,64 | 112,5 | 97,75 | 143,66 |
| Di-n-butylzinndilaurat | 0,5 | | 0,5 | 0,5 | 0,5 | 0,5 |
| Verlaufmittel | 1,0 | 1,0 | 1,0 | 1,0 | 1,0 | 1,0 |
| NCO-Äquivalent-Gewicht | | | | | | |
| theor. | 574 | 492 | 539 | 698 | 804 | 547 |
| prakt. | 801 | | 781 | 915 | 1050 | 795 |
| Viskosität bei | | | | | | |
| 60°C (in Pa · s) | 604 | 790 | 914 | 1055 | 1440 | 660 |
| 50°C (in Pa · s) | 1008 | 1580 | 2050 | 2190 | 2580 | 1435 |
| 40°C (in Pa · s) | 2900 | 3965 | 4900 | 5200 | 5975 | 3774 |
| 30°C (in Pa · s) | 6740 | 12 400 | 15 700 | 16 140 | 16 900 | 11 950 |
| 20°C (in Pa · s) | 19 500 | 40 560 | 59 100 | 60 100 | 62 580 | 39 780 |
| Mechanische Kenndaten | | | | | | |
| Zugfestigkeit ($N/mm^2$) | 32,1 | 37,1 | 34,9 | 35,1 | 36,5 | 38,2 |
| Dehnung (%) | 230 | 190 | 230 | 235 | 220 | 195 |
| $\sigma_{100}$-Spannung ($N/mm^2$) | 19,1 | 22,5 | 18,7 | 19,1 | 19,9 | 23,8 |

Die PUR-Quasi-Einkomponentenbeschichtungsmassen wurden in den Beispielen 6, 8–11 nach dem Zweistufenverfahren hergestellt, während die Beschichtungsmasse gemäß Beispiel 7 wieder nach dem Einstufenprozeß B 1 oder B 2 (gleiche Ergebnisse) hergestellt wurde.

Die Ergebnisse der Stabilitätsprüfungen — Waschlauge-, Tropen-, Sterilisationstest — sind in Tabelle 3 zusammengefaßt. Die Haftung der Beschichtungsmassen auf vorbehandelten Glasflaschen und -platten (auch nach 5 Zyklen Waschlaugentest) war ausgezeichnet. Der Splitterschutz war in den Rezepturen mit einer Dehnung von >150% gewährleistet. Je geringer die Dehnung der Folie (siehe

Vergleichsbeispiele), desto geringer ist der Splitterschutz, d. h. die Splitter der berstenden Glasflaschen sind bis in einen Umkreis von > 2 m zu finden. Die gleiche Beobachtung wurde gemacht, wenn die Dehnung zwar > 150% ist, jedoch die Zugfestigkeit < 28 N/mm² betrug.

Tabelle 3 zeigt die Waschlaugen-, Tropen- und Sterilisationsbeständigkeit ausgewählter Beispiele aus den Tabellen 1 und 2.

Tabelle 4 zeigt zwei Beispiele unter Verwendung von TCDI.

Tabelle 3

| | | Beispiele aus Tabelle 1 und 2 | | | | | | | |
|---|---|---|---|---|---|---|---|---|---|
| | | in | 2 | 3 | 4 | 6 | 7 | 9 | 12 |
| Waschlaugentest | | | | | | | | | |
| vor dem Test | | | | | | | | | |
| Zugfestigkeit | $\sigma_B$ | $N/mm^2$ | 36,1 | 36,8 | 38,3 | 31,8 | 37,7 | 35,8 | 31,6 |
| Dehnung | $\varepsilon_B$ | % | 265 | 250 | 230 | 230 | 205 | 210 | 200 |
| $\sigma_{100}$-Spannung | $\sigma_{100}$ | $N/mm^2$ | 18,7 | 19,2 | 20,1 | 19,1 | 23,1 | 19,4 | 14,3 |
| nach dem Test | | | | | | | | | |
| $\sigma_B$ | | | | | | | | | |
| n. 5. Zyklus | | $N/mm^2$ | 34,4 | 35,1 | 36,4 | 30,3 | 32,7 | 31,6 | 28,3 |
| u. n. 24 h bei RT | | $N/mm^2$ | 37,1 | 37 | 36,6 | 28,9 | 34,4 | 33,4 | 32,1 |
| $\varepsilon_B$ | | | | | | | | | |
| n. 5. Zyklus | | % | 270 | 255 | 210 | 270 | 195 | 200 | 195 |
| u. n. 24 h bei RT | | % | 280 | 260 | 200 | 210 | 200 | 220 | 230 |
| $\sigma_{100}$ | | | | | | | | | |
| n. 5. Zyklus | | $N/mm^2$ | 14,1 | 15,3 | 17,5 | 14,1 | 20,9 | 17,5 | 13,8 |
| u. n. 24 h bei RT | | $N/mm^2$ | 16,9 | 17,1 | 17,9 | 19,6 | 22,8 | 18,3 | 14,1 |
| Tropentest | | | | | | | | | |
| vor dem Test | | | | | | | | | |
| Zugfestigkeit | $\sigma_B$ | $N/mm^2$ | 35,4 | 35,9 | 37,7 | 30,9 | 38,1 | 34,8 | 32 |
| Dehnung | $\varepsilon_B$ | % | 240 | 250 | 220 | 200 | 240 | 220 | 210 |
| $\sigma_{100}$-Spannung | $\sigma_{100}$ | $N/mm^2$ | 18,4 | 18,8 | 19,8 | 18,9 | 22,6 | 18,8 | 14,5 |

Fortsetzung

| | | Beispiele aus Tabelle 1 und 2 | | | | | | |
|---|---|---|---|---|---|---|---|---|
| | in | 2 | 3 | 4 | 6 | 7 | 9 | 12 |
| nach dem Test | | | | | | | | |
| $\sigma_B$ n. 1. d + 24 h bei RT | $N/mm^2$ | 37,5 | 36,1 | 37,0 | 35,4 | 37,3 | 33,7 | 30,9 |
| $\varepsilon_B$ n. 1. d + 24 h bei RT | % | 270 | 265 | 230 | 220 | 235 | 240 | 215 |
| $\sigma_{100}$ n. 1. d + 24 h bei RT | $N/mm^2$ | 17,5 | 17,9 | 18,1 | 18,5 | 21,5 | 17,1 | 13,9 |
| $\sigma_B$ n. 7. d + 24 h bei RT | $N/mm^2$ | 32,4 | 33,1 | 34,5 | 31,4 | 34,8 | 32,4 | 30,1 |
| $\varepsilon_B$ n. 7. d + 24 h bei RT | % | 240 | 250 | 215 | 240 | 225 | 220 | 230 |
| $\sigma_{100}$ n. 7. d + 24 h bei RT | $N/mm^2$ | 16,3 | 16,8 | 17,2 | 18,1 | 20,6 | 17,3 | 13,5 |
| $\sigma_B$ n. 14. d + 24 h bei RT | $N/mm^2$ | 28,8 | 30,5 | 31,7 | 30,1 | 32,7 | 30,6 | 29,0 |
| $\varepsilon_B$ n. 14. d + 24 h bei RT | % | 210 | 210 | 200 | 215 | 210 | 205 | 220 |
| $\sigma_{100}$ n. 14. d + 24 h bei RT | $N/mm^2$ | 15,1 | 16,1 | 16,4 | 17,5 | 19,5 | 16,7 | 12,7 |
| Sterilisation | | | | | | | | |
| Gewichtszunahme | % | 2,8 | 2,6 | 2,6 | 2,7 | 2,6 | 2,7 | 2,4 |

Die Stabilitätsprüfungen wurden ebenfalls mit den Beispielen 5 und 11 durchgeführt. Die Ergebnisse entsprechen weitgehendst den Beispielen 3 und 7.
RT = Raumtemperatur.

Tabelle 4

| | Beispiel | |
|---|---|---|
| | 12 | 13 |
| Präpolymer OH/NCO = 1 : X; X = | 2,42 | 2,42 |
| Polyester gemäß A1 | 535,6 | 497,67 |
| Trimethylolpropan | 20,6 | – |
| Polyester gemäß A4 | – | 89,98 |
| Di-n-butylzinndilaurat | 0,1 | 0,1 |
| TCDI | 443,7 | 412,25 |
| NCO-Äquivalent-Gewicht | | |
| theor. | 479 | 515 |
| gef. | 511 | 541 |

Fortsetzung

| | Beispiel 12 | Beispiel 13 |
|---|---|---|
| Viskosität bei | | |
| 60°C (in Pa · s) | 653 | 764 |
| 50°C (in Pa · s) | 1290 | 1400 |
| 40°C (in Pa · s) | 2985 | 3150 |
| 30°C (in Pa · s) | 8370 | 8620 |
| 20°C (in Pa · s) | 26 500 | 26 800 |
| 2,4,6-Triamino-1,3,5-triazin/Polyol-Paste | | |
| Polyester gemäß A1 | 500 | 500 |
| 2,4,6-Triamino-1,3,5-triazin | 500 | 500 |
| Beschichtungsmasse OH/NCO = 1 : X; X = | 2,21 | 2,21 |
| Präpolymer | 873,5 | 879,6 |
| 2,4,6-Triamino-1,3,5-triazin/Polyol-Paste | 125,0 | 118,9 |
| Di-n-butylzinndilaurat | 0,5 | 0,5 |
| Verlaufmittel | 1,0 | 1,0 |
| NCO-Äquivalent-Gewicht | | |
| theor. | 628 | 661 |
| gef. | 911 | 875 |
| Viskosität bei | | |
| 60°C (in Pa · s) | 901 | 995 |
| 50°C (in Pa · s) | 1985 | 1610 |
| 40°C (in Pa · s) | 5030 | 3405 |
| 30°C (in Pa · s) | 14 900 | 8800 |
| 20°C (in Pa · s) | 65 000 | 27 100 |
| Mechanische Kenndaten | | |
| Zugfestigkeit ($N/mm^2$) | 32,7 | 31,4 |
| Dehnung (%) | 205 | 190 |
| $\sigma_{100}$-Spannung ($N/mm^2$) | 14,6 | 14,1 |

Vergleichsbeispiel C 1

Die Zubereitung der Massen zu $C_1 - C_3$ erfolgte nach dem vorher beschriebenen Zweistufenverfahren.

Präpolymer OH/NCO = 1 : 2,42

214,8 g Polytetramethylenätherglykol (OH-Zahl: 110,5 mg KOH/g)
184,2 g Polytetramethylenätherglykol (OH-Zahl: 173,5 mg KOH/g)
47,7 g Trimethylolpropan
0,1 g Di-n-butylzinndilaurat
553,3 g IPDI
NCO-Äquivalent-Gewicht: theor.: 342 gef.: 360

2,4,6-Triamino-1,3,5-triazin/Polyol-Paste

269,1 g Polytetramethylenätherglykol (OH-Z.: 110,5 mg KOH/g)
230,1 g Polytetramethylenätherglykol (OH-Z.: 173,5 mg KOH/g)
800 g 2,4,6-Triamino-1,3,5-triazin

Beschichtungsmasse

834,4 g Präpolymer
165,6 g 2,4,6-Triamino-1,3,5-triazin/Polyol-Paste
0,5 g Di-n-butylzinndilaurat (DBTL)
0,5 g Verlaufmittel

Mechanische Kenndaten

Zugfestigkeit $\sigma_B$: 35,1 N/mm²
Dehnung $\varepsilon_B$: 30%
$\sigma_{100}$-Spannung $\sigma_{100}$: 23,1 N/mm²

Aufgrund der geringen Dehnung war kein Splitterschutz gewährleistet. Im Falltest hielt der Schutzüberzug die berstende Glasflasche nicht zusammen. Die Splitter konnten im weiten Umkreis gefunden werden.

Vergleichsbeispiel C 2

Präpolymer OH/NCO = 1 : 2,42

221,12 g Polytetramethylenätherglykol (OH-Z.: 173,5 mg KOH/g)
257,76 g Polytetramethylenätherglykol (OH-Z.: 110,5 mg KOH/g)
28,65 g TMP
0,1 g DBTL
492,47 g IPDI
NCO-Äquivalent-Gewicht: theor. 384 prakt. 438

2,4,6-Triamino-1,3,5-triazin/Polyol-Paste

230,9 g Polytetramethylenätherglykol (OH-Z.: 173,5 mg KOH/g)
269,1 g Polytetramethylenätherglykol (OH-Z.: 110,5 mg KOH/g)
500 g 2,4,6-Triamino-1,3,5-triazin

Beschichtungsmasse

859,7 g Präpolymer
140,3 g 2,4,6-Triamino-1,3,5-triazin/Polyol-Paste
0,5 g DBTL
0,5 g Verlaufmittel

Mechanische Kenndaten

| | |
|---|---|
| Zugfestigkeit $\sigma_B$: | 34,5 N/mm² |
| Dehnung $\varepsilon_B$: | 200% |
| $\sigma_{100}$-Spannung $\sigma_{100}$: | 21,1 N/mm² |

Im Falltest wurden keine streuenden Glassplitter beobachtet. Die Folien zeigten jedoch nach dem Härtungsprozeß eine deutliche Gelbfärbung und bereits nach 350 h Kurzbewitterung im Xenotest trat Versprödung auf und nach insgesamt 600 h die Zerstörung der Folie. Auch bei Verwendung von Oxidationsstabilisatoren konnte keine wesentliche Verbesserung erzielt werden.

Vergleichsbeispiel C 3

Präpolymer

478,35 g Polyätherpolyol (OH-Z.: 139,5 mg KOH/g)
28,76 g TMP
0,1 g DBTL
492,79 g IPDI
NCO-Äquivalent-Gewicht: theor.: 384 prakt.: 397

2,4,6-Triamino-1,3,5-triazin/Polyol-Paste

500 g Polyätherpolyol (OH-Z.: 139,5 mg KOH/g)
500 g 2,4,6-Triamino-1,3,5-triazin

Beschichtungsmasse

846,17 g Präpolymer
152,33 g 2,4,6-Triamino-1,3,5-triazin/Polyol-Paste
0,5 g DBTL
1,0 g Verlaufmittel

Mit dieser PUR-Beschichtungsmasse konnten aufgrund hoher Sprödigkeit keine Meßfolien hergestellt werden, so daß auch keine Fallteste mit beschichteten Glasflaschen durchgeführt wurden.

**Patentansprüche**

1. Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 µm durch Auftragen von isocyanatgruppenhaltigen, lösungsmittelfreien Beschichtungsmassen auf eine zunächst gereinigte, mit einer wäßrigen oder alkoholischen Silanschlichte behandelte und getrocknete und anschließend auf 80—120°C erwärmte Glasoberfläche sowie gegebenenfalls Aushärten des Überzugs bei erhöhter Temperatur, dadurch gekennzeichnet, daß man als isocyanatgruppenhaltige, lösungsmittelfreie Beschichtungsmasse eine solche verwendet, die aus Umsetzungsprodukten hydroxylgruppenhaltiger Polyester aus aliphatischen und/oder cycloaliphatischen Di- und/oder Tricarbonsäuren mit Diolen und/oder Triolen/Polyol-Gemischen mit einer Funktionalität von $\geqq 2$ und aliphatischen und/oder cycloaliphatischen Diisocyanaten oder deren Gemischen mit einem NCO-Gehalt von 5—15% oder Diisocyanat-Harnstoffaddukten sowie 2,4,6-Triamino-1,3,5-triazin bestehen und daß man die Beschichtung bei einer Temperatur von 180—260°C aushärtet.

2. Verfahren nach Anspruch 1, dadurch gekennzeichnet, daß als Diisocyanat 3-Isocyanatomethyl-3,5,5-trimethylcyclohexylisocyanat, 3(4),8(9)-Diisocyanatomethyltricyclo[5.2.1.0$^{2,6}$]decan oder 2,2,4-(2,4,4)-Trimethylhexamethylendiisocyanat eingesetzt werden.

3. Verfahren nach den Ansprüchen 1 und 2, dadurch gekennzeichnet, daß das Verfahren zur Herstellung der Beschichtungsmasse einstufig durchgeführt wird, wobei das 2,4,6-Triamino-1,3,5-triazin zusammen mit dem Disocyanat in den Reaktor vorgelegt wird.

4. Verfahren nach den Ansprüchen 1 und 2, dadurch gekennzeichnet, daß das Verfahren zur Herstellung der Beschichtungsmasse einstufig durchgeführt wird, wobei das 2,4,6-Triamino-1,3,5-triazin erst nach der Umsetzung des Diisocyanats mit den Polyolen zugefügt wird und das Reaktionsprodukt gegebenenfalls durch ein Mischaggregat geführt wird.

**Claims**

1. Process for coating glass surfaces, especially glass bottles, to prevent the scatter of glass particles on bursting, with a transparent, thermoset resin protective layer of more than 50 µm, by applying solvent-free coating compositions, containing isocyanate groups, onto a glass surface which has beforehand been cleaned, treated with an aqueous or alcoholic silane size, dried and then heated to 80 – 120° C, and, if appropriate, curing the coating at an elevated temperature, characterised in that the employed solvent-free coating composition containing isocyanate groups is a composition which consists of reaction products of polyesters, containing hydroxyl groups and obtained from aliphatic and/or cycloaliphatic dicarboxylic and/or tricarboxylic acids with diols and/or triols/polyol mixtures having a functionality of ≧2, and aliphatic and/or cycloaliphatic diisocyanates or their mixtures having an NCO content of 5 – 15% or diisocyanate-urea adducts as well as 2,4,6-triamino-1,3,5-triazine, and that the coating is cured at a temperature of 180 – 260° C.

2. Process according to Claim 1, characterised in that 3-isocyanatomethyl-3,5,5-trimethylcyclohexyl isocyanate, 3(4),8(9)-diisocyanatomethyl[5.2.1.$0^{2,6}$]decane or 2,2,4(2,4,4)-trimethylhexamethylene diisocyanate is employed as the diisocyanate.

3. Process according to Claims 1 and 2, characterised in that the process for the preparation of the coating composition is carried out as a single stage, the 2,4,6-triamino-1,3,5-triazine being initially introduced into the reactor together with the diisocyanate.

4. Process according to Claims 1 and 2, characterised in that the process for the preparation of the coating composition is carried out in a single stage, the 2,4,6-triamino-1,3,5-triazine only being added after the reaction of the diisocyanate with the polyols, and the reaction product being passed through a mixing unit, if appropriate.

**Revendications**

1. Procédé d'enduction de surfaces en verre, en particulier, de bouteilles en verre, en vue d'empêcher la dispersion des particules de verre en cas d'éclatement, avec une couche protectrice duroplaste transparente d'une épaisseur supérieure à 50 µm par application de masses d'enduction exemptes de solvant et contenant des groupes isocyanate sur une surface en verre qui est tout d'abord nettoyée, puis traitée avec un enduit aqueux ou alcoolique de silane, pour être ensuite séchée et chauffée à 80 – 120° C, éventuellement avec durcissement du revêtement à température élevée, caractérisé en ce que, comme masse d'enduction exempte de solvant et contenant des groupes isocyanate, on utilise une masse qui est constituée de produits réactionnels de polyesters contenant des groupes hydroxy et formés à partir d'acides dicarboxyliques et/ou tricarboxyliques aliphatiques et/ou cycloaliphatiques avec des diols et/ou des triols/mélanges de polyols d'une fonctionnalité ≧2 et de diisocyanates aliphatiques et/ou cycloaliphatiques ou leurs mélanges avec une teneur en groupes NCO de 5 – 15% ou des produits d'addition de diisocyanate/urée, ainsi que de 2,4,6-triamino-1,3,5-triazine, tandis qu'on durcit l'enduit à une température de 180 – 260° C.

2. Procédé suivant la revendication 1, caractérisé en ce que, comme diisocyanate, on utilise le 3-isocyanatométhyl-3,5,5-triméthylcyclohexylisocyanate, le 3(4),8(9)-diisocyanatométhyl[5.2.1.$0^{2,6}$]-décane ou le 2,2,4 (2,4,4)-triméthylhexaméthylènediisocyanate.

3. Procédé suivant les revendications 1 et 2, caractérisé en ce qu'on effectue le procédé de préparation de la masse d'enduction en une étape en déposant préalablement la 2,4,6-triamino-1,3,5-triazine avec le diisocyanate dans le réacteur.

4. Procédé suivant les revendications 1 et 2, caractérisé en ce qu'on effectue le procédé de préparation de la masse d'enduction en une étape en n'ajoutant la 2,4,6-triamino-1,3,5-triazine qu'après la réaction du diisocyanate avec les polyols, tandis que l'on fait éventuellement passer le produit réactionnel à travers un appareil de mélange.